# EUROPEAN PATENT SPECIFICATION

(11) **EP 3 301 799 B1**
(45) Date of publication and mention of the grant of the patent: **08.07.2020**
(21) Application number: 15895049.3
(22) Date of filing: 21.09.2015
(51) Int. Cl.: H02M 1/088, H02M 1/32, H02M 3/158

(54) **NON-ISOLATED BIDIRECTIONAL DC-DC CONVERTER HAVING IMPROVED STABILITY**
NICHTISOLIERTER BIDIREKTIONALER GLEICHSPANNUNGSWANDLER MIT VERBESSERTER STABILITÄT
CONVERTISSEUR CC-CC BIDIRECTIONNEL NON ISOLÉ AYANT UNE STABILITÉ AMÉLIORÉE

(30) Priority: 11.06.2015 KR 20150082809
(43) Date of publication of application: 04.04.2018
(73) Proprietor: LS Automotive Technologies Co., Ltd., Danwon-gu, Ansan-si, Gyeonggi-do 15611 (KR)
(72) Inventor: GOHNG, Sang-Ho, Seongnam-si Gyeonggi-do 13581 (KR)
(74) Representative: advotec.
(86) International application number: PCT/KR2015/009891
(87) International publication number: WO 2016/199981

(56) References cited:
- EP-A1- 2 330 728
- EP-A1- 2 388 903
- WO-A2-03/063327
- DE-A1-102012 218 914
- JP-A- 2002 112 534
- JP-A- 2003 125 576
- JP-A- 2007 097 252
- US-A1- 2004 037 100
- US-A1- 2009 167 245
- US-A1- 2015 042 298

## Description

### TECHNICAL FIELD

The present disclosure relates to a non-isolated bidirectional DC-DC converter, and more particularly, to a non-isolated bidirectional DC-DC converter having improved stability.

The present application claims priority to Korean Patent Application No. 10-2015-0082809 filed on June 11, 2015 in the Republic of Korea.

### BACKGROUND ART

As 48V systems for vehicles are being introduced recently, the need for a bidirectional DC-DC converter for controlling the flow of electricity between an existing 12V system and the 48V system has emerged. The bidirectional DC-DC converter controls a switch according to a command signal to operate in a boost mode or a buck mode. Korean Unexamined Patent Publication No. 10-2010-0115087 discloses a bidirectional DC-DC converter and a control method thereof.

Meanwhile, a DC-DC converter for protecting a converter system from short circuit and reverse polarity at a 12V terminal and a 48V terminal has been disclosed.

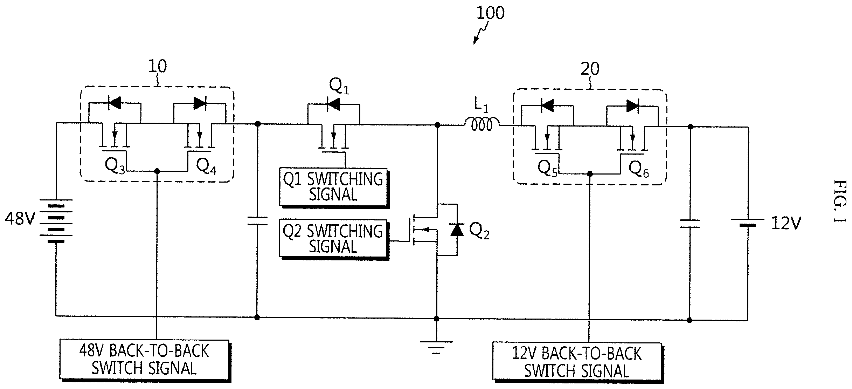

FIG. 1 is a diagram showing a conventional non-isolated bidirectional DC-DC converter 100 having a protection circuit included therein.

Referring to FIG. 1, in the conventional non-isolated bidirectional DC-DC converter 100, a first back-to-back switch 10 is connected to a 48V terminal and a second back-to-back switch 20 is connected to a 12V terminal or a 24V terminal to protect the non-isolated bidirectional DC-DC converter 100 from short circuit and reverse polarity.

The back-to-back switches 10, 20 respectively include two switches disposed to be adhered to each other and function to protect the non-isolated bidirectional DC-DC converter and other components from overvoltage, overcurrent, noise signal and reverse polarity, which are input bi-directionally. In other words, the first back-to-back switch 10 connected to a 48V high-voltage terminal and the second back-to-back switch 20 connected to a 10V, 12V or 24V low-voltage terminal respectively protect the inner circuits and other components from short circuit of the 48V terminal, short circuit of the 12V/24V terminal, excessive electric phenomenon or the like.

The back-to-back switches 10, 20 are respectively turned on or off according to a back-to-back switch signal. In other words, when the non-isolated bidirectional DC-DC converter 100 is operating, each of the back-to-back switches 10, 20 is turned on by receiving a switching signal which instructs turn-on.

As described above, in the conventional non-isolated bidirectional DC-DC converter 100 having a protection circuit, a pair of back-to-back switches 10, 20 are provided. In other words, the first back-to-back switch 10 connected to a high-voltage terminal and the second back-to-back switch 20 connected to a low-voltage terminal should be installed at the non-isolated bidirectional DC-DC converter 100.

However, the structure of connecting the pair of back-to-back switches 10, 20 to the non-isolated bidirectional DC-DC converter 100 causes a problem in terms of cost and is against the present tendency of miniaturizing an electronic product.

In addition, in the conventional protection circuit, since four switches (Q₃, Q₄, Q₅, Q₆) are additionally installed at the non-isolated bidirectional DC-DC converter 100, additional losses are generated at each switch (Q₃, Q₄, Q₅, Q₆), and thus the efficiency of the converter is lowered.

Moreover US 2009/167245 A1 and US 2015/042298 A1 disclose non-isolated bidirectional DC-DC converters related to the invention.

### DISCLOSURE

### Technical Problem

The present disclosure is designed to solve the problems of the related art, and therefore the present disclosure is directed to providing a non-isolated bidirectional DC-DC converter, which has a low manufacturing cost, allows easy miniaturization and ensure improved stability.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In one aspect of the present disclosure, there is provided a non-isolated bidirectional DC-DC converter, which performs bidirectional voltage conversion between a high-voltage power source and a low-voltage power source and includes a protection switch, the converter comprising: a DC-DC converter unit including a pair of switching elements composed of a high-voltage switch and a low-voltage switch, which are switched to a boost mode or a buck mode as a response to a switching signal and an inductor connected to the high-voltage switch and the low-voltage switch; a first protection switch disposed between the high-voltage switch of the DC-DC converter unit and the high-voltage power source to serve as a back-to-back switch together with the high-voltage switch or the second protection switch; and a second protection switch disposed between the inductor of the DC-DC converter unit and the low-voltage power source to serve as a back-to-back switch together with the low-voltage switch or the first protection switch, wherein the non-isolated bidirectional DC-DC converter further comprises a first logic element configured to calculate a logic product of a switching signal of the first protection switch and a switching signal of the high-voltage switch and apply the switching signal with the calculated logic product to the high-voltage switch; and a second logic element configured to calculate a logic product of a switching signal of the second protection switch and a switching signal of the low-voltage switch and apply the switching signal with the calculated logic product to the low-voltage switch, wherein the first logic element and the second logic element perform the logic AND function.

The first protection switch and the second protection switch may operate as a back-to-back switch to block an abnormal current generated between the high-voltage power source and the low-voltage power source. Also, the first protection switch and the high-voltage switch may operate as a back-to-back switch to block an abnormal current generated between a ground connected to the low-voltage switch and the high-voltage power source.

The second protection switch and the low-voltage switch may operate as a back-to-back switch to block an abnormal current generated at the low-voltage power source or flowing to the low-voltage power source.

The switch is a semiconductor switch, and in this case, a source terminal of the first protection switch may be connected to a positive electrode of the high-voltage power source, a drain terminal of the first protection switch may be connected to a drain terminal of the high-voltage switch, a drain terminal of the second protection switch may be connected to the inductor of the DC-DC converter unit, and a source terminal of the second protection switch may be connected to a positive electrode of the low-voltage power source.

### Advantageous Effects

The non-isolated bidirectional DC-DC converter according to the present disclosure may be manufactured at a low cost and allows a miniaturized design of the product by reducing the number of switches used for protecting a system, compared to a conventional non-isolated bidirectional DC-DC converter.

In addition, the non-isolated bidirectional DC-DC converter according to the present disclosure may minimize a system loss, which is generated in proportion to the number of switches, and improve the efficiency of the converter by reducing the number of switches used for protecting a system.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a conventional non-isolated bidirectional DC-DC converter having a protection circuit included therein.
FIG. 2 is a diagram showing a non-isolated bidirectional DC-DC converter having improved stability according to an embodiment of the present disclosure.

### BEST MODE

The above objects, features and advantages of the present disclosure will become apparent from the following descriptions of the embodiments with reference to the accompanying drawings, from which it will be deemed that a person having ordinary skill can easily practice the technical features of the present disclosure. Also, any explanation of the prior art known to relate to the present disclosure may be omitted if it is regarded to render the subject matter of the present disclosure vague. Hereinafter, an embodiment of the present disclosure will be described in detail with reference to the accompanying drawings.

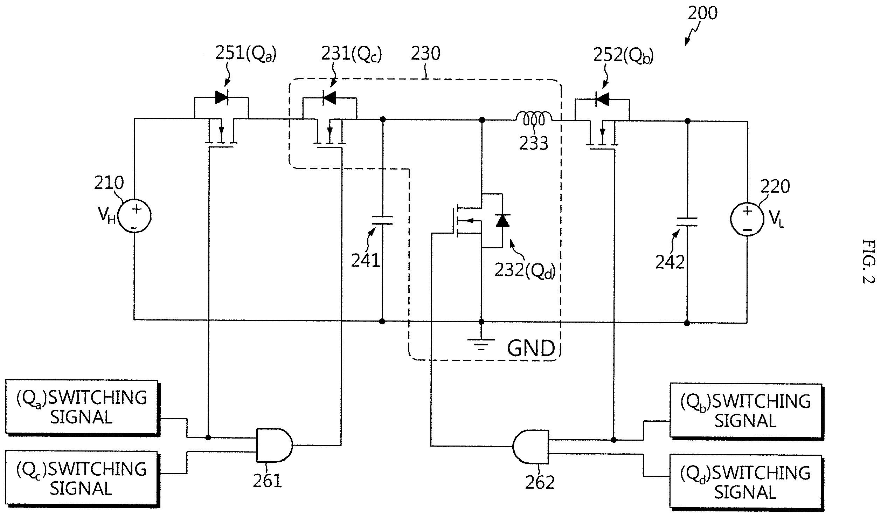

FIG. 2 is a diagram showing a non-isolated bidirectional DC-DC converter 200 having improved stability according to an embodiment of the present disclosure.

As shown in FIG. 2, the non-isolated bidirectional DC-DC converter 200 having improved stability according to an embodiment of the present disclosure includes a high-voltage power source 210, a low-voltage power source 220, a plurality of capacitors 241, 242, a DC-DC converter unit 230 and a plurality of protection switches 251, 252.

The high-voltage power source 210 has a higher voltage than the low-voltage power source 220 and is a chargeable/dischargeable power source. The high-voltage power source 210 may adopt a 48V battery or an ultra-capacitor. If the non-isolated bidirectional DC-DC converter 200 is operated, the high-voltage power source 210 is electrically connected to the DC-DC converter unit 230 to apply power to a load device using a high voltage or charges the low-voltage power source 220.

The low-voltage power source 220 has a lower voltage than the high-voltage power source 210 and is a chargeable/dischargeable power source. The low-voltage power source 220 may adopt a 12V battery or a 24V battery. If the non-isolated bidirectional DC-DC converter 200 is operated, the low-voltage power source 220 applies power to a load device using a low voltage or charges the high-voltage power source 210.

The capacitors 241, 242 are respectively connected to the high-voltage power source 210 and the low-voltage power source 220 in parallel and may adopt output smoothing capacitors. The capacitor 241 connected to the high-voltage power source 210 may be positioned to be connected in parallel with the high-voltage power source 210 between the first protection switch 251 and the high-voltage switch 231, and may also be positioned to be connected in parallel with the high-voltage power source 210 between the high-voltage power source 210 and the first protection switch 251.

The DC-DC converter unit 230 operates in a boost mode or a buck mode depending on a switching signal. In other words, the DC-DC converter unit 230 operates in a boost mode in which the current of the low-voltage power source 220 is moved to the high-voltage power source 210 by a switching signal, and operates in a buck mode in which the current of the high-voltage power source 210 is moved to the low-voltage power source 220.

The DC-DC converter unit 230 includes an inductor 233 for accumulating energy when current flows, and a pair of switches 231, 232 that operate complementarily.

The pair of switches 231, 232 (Q_{c}, Q_{d}) included in the DC-DC converter unit 230 are classified into a high-voltage switch 231 (Q_{c}) and a low-voltage switch 232 (Q_{d}), and each switch 231, 232 is turned on or off depending on the switching signal. Each switch 231, 232 is turned on or off based on pulse width modulation (PWM) which is a switching signal generated by a switch control module (not shown). In particular, the low-voltage switch 232 and the high-voltage switch 231 operate complementarily with each other. In other words, if the low-voltage switch 232 is turned on, the high-voltage switch 231 is turned off, and if the high-voltage switch 231 is turned on, the low-voltage switch 232 is turned off.

When the current moves from the low-voltage power source 220 to the high-voltage power source 210, the low-voltage switch 232 operates as a main switch, and when the current moves from the high-voltage power source 210 to the low-voltage power source 220, contrary to the above, the high-voltage switch 231 operates as a main switch. Preferably, each switch 231, 232 may use a metal oxide semiconductor field effect (MOSFET) switch as a semiconductor switch. In addition, a gate terminal of the low-voltage switch 232 may be grounded.

Meanwhile, in the non-isolated bidirectional DC-DC converter 200 according to the present disclosure, the first protection switch 251 is connected between the high-voltage power source 210 and the high-voltage switch 231 to serve as a back-to-back switch, and the second protection switch 252 is connected between the low-voltage power source 220 and the inductor 233 to serve as a back-to-back switch.

A drain terminal of the first protection switch 251 (Qₐ) is connected to a drain terminal of the high-voltage switch 231, and a source terminal of the first protection switch 251 is connected to a positive electrode of the high-voltage power source 210. Due to this connection structure, the first protection switch 251 and the high-voltage switch 231 serve as a back-to-back switch between the high-voltage power source 210 and the ground (GND) and block the flow of an abnormal current generated between the high-voltage power source 210 and the ground (GND). In particular, the first protection switch 251 and the high-voltage switch 231 prevent the flow of an abnormal current generated due to a short circuit between the high-voltage power source 210 and the ground (GND) in advance and blocks the flow of a reverse polarity current generated due to a connection error, thereby protecting the system from short circuit and reverse polarity.

In addition, a drain terminal of the second protection switch 252 (Q_{b}) is connected to the inductor 233 of the DC-DC converter unit 230, and a source terminal of the second protection switch 252 is connected to a positive electrode of the low-voltage power source 220. Due to this connection structure, the second protection switch 252 and the low-voltage switch 232 serve as a back-to-back switch with respect to the low-voltage power source 220 and block an abnormal current generated at the low-voltage power source 220 or flowing into the low-voltage power source 220. In particular, the second protection switch 252 and the low-voltage switch 232 serve as a back-to-back switch to block the flow of an abnormal current generated by an internal short circuit of the low-voltage power source 220 or other components and also block a reverse polarity current generated due to a connection error.

Meanwhile, the first protection switch 251 and the second protection switch 252 serve as a back-to-back switch between the high-voltage power source 210 and the low-voltage power source 220 to block the flow of an abnormal current generated by a short circuit between the high-voltage power source 210 and the low-voltage power source 220 and a reverse polarity current generated due to a connection error.

The first logic element 261 calculates a logic product (AND) of a switching signal of the high-voltage switch 231 and a switching signal of the first protection switch 251 and applies a switching signal corresponding to the calculation result to the high-voltage switch 231. The switching signal of the first protection switch 251 and the switching signal of the high-voltage switch 231 are input to the first logic element 261 as input information, and an output port of the first logic element 261 is connected to a gate terminal of the high-voltage switch 231. In other words, the first logic element 261 receives a switching signal (namely, a PWM signal) of the first protection switch 251 and a switching signal (namely, a PWM signal) of the high-voltage switch 231 as input information, calculates a logic product (AND) of both switching signals, and transmits a switching signal corresponding to the calculation result to the gate terminal of the high-voltage switch 231.

The second logic element 262 calculates a logic product (AND) of a switching signal of the low-voltage switch 232 and a switching signal of the second protection switch 252 and applies a switching signal corresponding to the calculation result to the low-voltage switch 232. The switching signal of the second protection switch 252 and the switching signal of the low-voltage switch 232 are input to the second logic element 262 as input information, and an output port of the second logic element 262 is connected to a gate terminal of the low-voltage switch 232. In other words, the second logic element 262 receives a switching signal (namely, a PWM signal) of the second protection switch 252 and a switching signal (namely, a PWM signal) of the low-voltage switch 232 as input information, calculates a logic product (AND) of both switch signals, and transmits a switching signal corresponding to the calculation result to the low-voltage switch 232.

As the first logic element 261 calculates a logic product, the switching signal applied to the high-voltage switch 231 is a resultant value obtained by calculating a logic product (AND) of the switching signal of the first protection switch 251 and the switching signal of the high-voltage switch 231. In other words, the high-voltage switch 231 is turned on only when a switching signal for turning on both the high-voltage switch 231 and the first protection switch 251 is generated. Meanwhile, if a switching signal for turning on the first protection switch 251 is not generated but a switching signal for turning on only the high-voltage switch 231 is generated, the high-voltage switch 231 comes to a turn-off state by means of the logic product (AND).

In addition, according to the logic calculation of the second logic element 262, the switching signal applied to the low-voltage switch 232 is a resultant value obtained by calculating a logic product (AND) of the switching signal of the second protection switch 252 and the switching signal of the low-voltage switch 232. In other words, the low-voltage switch 232 is turned on only when a switching signal for turning on both the low-voltage switch 232 and the second protection switch 252 is generated. Meanwhile, if a switching signal for turning on the second protection switch 252 is not generated but a switching signal for turning on only the low-voltage switch 232 is generated, the low-voltage switch 232 comes to a turn-off state by means of the logic product (AND).

Meanwhile, if the non-isolated bidirectional DC-DC converter 200 is operated, a switching signal for turning on the first protection switch 251 and the second protection switch 252 may be continuously generated at a switching control module (not shown). In addition, the switching control module (not shown) may also generate a switching signal for turning on any one of the high-voltage switch 231 and the low-voltage switch 232. In other words, if the non-isolated bidirectional DC-DC converter 200 is operated, the switch control module may generate a signal for turning on any one of the high-voltage switch 231 and the low-voltage switch 232 in a state of generating a switching signal for turning on both the first protection switch 251 and the second protection switch 252.

The non-isolated bidirectional DC-DC converter 200 including the protection switches 251, 252 may block an unintentional abnormal current (for example, reverse polarity current, overcurrent or the like) which may be generated between the high-voltage power source 210 and the low-voltage power source 220, by means of the first protection switch 251 and the second protection switch 252. In addition, an unintentional current flow generated between the high-voltage power source 210 and the ground (GND) is blocked by the first protection switch 251 and the high-voltage switch 231. Further, an unintentional current flow generated at the low-voltage power source 220 is blocked by the second protection switch 252 and the low-voltage switch 232.

As described above, the non-isolated bidirectional DC-DC converter 200 including the protection switches according to an embodiment of the present disclosure may reduce a manufacturing cost and allow easy miniaturization because the number of switches is decreased compared to a conventional non-isolated bidirectional DC-DC converter 100. In addition, the non-isolated bidirectional DC-DC converter 200 according to an embodiment of the present disclosure may have improved converter efficiency by minimizing a system loss, which is generated in proportion to the number of switches, because the number of switches is decreased compared to a conventional non-isolated bidirectional DC-DC converter 100.

It should be understood by those skilled in the art that many adaptations, modifications and changes may be made to the present disclosure without departing from the technical aspects of the present disclosure, and the present disclosure described hereinabove is not limited by the disclosed embodiments and the accompanying drawings.

## Claims

1. A non-isolated bidirectional DC-DC converter (200), which performs bidirectional voltage conversion between a high-voltage power source (210) and a low-voltage power source (220) comprising:
a DC-DC converter unit (230) including a pair of switching elements composed of a high-voltage switch (231) and a low-voltage switch (232), which are switched to a boost mode or a buck mode as a response to a switching signal and an inductor (233) connected to the high-voltage switch (231) and the low-voltage switch (232),
a first protection switch (251) disposed between the high-voltage switch (231) of the DC-DC converter unit (230) and the high-voltage power source (210) to serve as a back-to-back switch together with the high-voltage switch (231) or a second protection switch (252);
the second protection switch (252) disposed between the inductor of the DC-DC converter unit (230) and the low-voltage power source (220) to serve as a back-to-back switch together with the low-voltage switch (232) or the first protection switch (251);
**characterized by** comprising:
a first logic element (261) configured to calculate a logic product of a switching signal of the first protection switch (251) and a switching signal of the high-voltage switch (231) and apply the switching signal with the calculated logic product to the high-voltage switch (231); and
a second logic element (262) configured to calculate a logic product of a switching signal of the second protection switch (252) and a switching signal of the low-voltage switch (232) and apply the switching signal with the calculated logic product to the low-voltage switch (232), wherein the first logic element (261) and the second logic element (262) perform the logic AND function.

2. The non-isolated bidirectional DC-DC converter (200) according to claim 1, wherein the first protection switch (251) and the second protection switch (252) operate as a back-to-back switch to block an abnormal current generated between the high-voltage power source (210) and the low-voltage power source (220).

3. The non-isolated bidirectional DC-DC converter (200) according to claim 1, wherein the first protection switch (251) and the high-voltage switch (231) operate as a back-to-back switch to block an abnormal current generated between a ground connected to the low-voltage switch (232) and the high-voltage power source (210).

4. The non-isolated bidirectional DC-DC converter (200) according to claim 1, wherein the second protection switch (252) and the low-voltage switch (232) operate as a back-to-back switch to block an abnormal current generated at the low-voltage power source (220) or flowing to the low-voltage power source (220).

5. The non-isolated bidirectional DC-DC converter (200) according to claim 1, wherein the switch is a semiconductor switch,
wherein a source terminal of the first protection switch (251) is connected to a positive electrode of the high-voltage power source (210), and a drain terminal of the first protection switch (251) is connected to a drain terminal of the high-voltage switch (231), and
wherein a drain terminal of the second protection switch (252) is connected to the inductor of the DC-DC converter unit (230), and a source terminal of the second protection switch (252) is connected to a positive electrode of the low-voltage power source (220).

## Patentansprüche

1. Nicht isolierter bidirektionaler Gleichspannungswandler (200), der eine bidirektionale Spannungswandlung zwischen einer Hochspannungsstromquelle (210) und einer Niederspannungsstromquelle (220) vornimmt, umfassend:
eine Gleichspannungswandlereinheit (230) mit zwei Schaltelementen, die aus einem Hochspannungsschalter (231) und einem Niederspannungsschalter (232) gebildet sind, die in Reaktion auf ein Schaltsignal in einen Tiefsetzbetrieb oder einen Hochsetzbetrieb schaltbar sind, und einer mit dem Hochspannungsschalter (321) und dem Niederspannungsschalter (232) verbundenen Induktionseinrichtung (233); und
einen ersten Schutzschalter (251), der zwischen dem Hochspannungsschalter (231) der Gleichspannungswandlereinheit (230) und der Hochspannungsstromquelle (210) angeordnet ist, um zusammen mit dem Hochspannungsschalter (231) oder einem zweiten Schutzschalter (252) als antiserieller Schalter zu dienen,
wobei der zweite Schutzschalter (252) zwischen der Induktionseinrichtung der Gleichspannungswandlereinheit (230) und der Niederspannungsstromquelle (220) angeordnet ist, um zusammen mit dem Niederspannungsschalter (232) oder dem ersten Schutzschalter (251) als antiserieller Schalter zu dienen,
**dadurch gekennzeichnet, dass** er umfasst:
ein erstes Logikelement (261) zur Berechnung eines logischen Produkts eines Schaltsignals des ersten Schutzschalters (251) und eines Schaltsignals des Hochspannungsschalters (231) und zum Anlegen des Schaltsignals mit dem berechneten logischen Produkt an den Hochspannungsschalter (231); und
ein zweites Logikelement (262) zur Berechnung eines logischen Produkts eines Schaltsignals des zweiten Schutzschalters (252) und eines Schaltsignals des Niederspannungsschalters (232) und zum Anlegen des Schaltsignals mit dem berechneten logischen Produkt an den Niederspannungsschalter (232), wobei das erste Logikelement (261) und das zweite Logikelement (262) die logische UND-Funktion anwenden.

2. Nicht isolierter bidirektionaler Gleichspannungswandler (200) nach Anspruch 1, wobei der erste Schutzschalter (251) und der zweite Schutzschalter (252) als antiserieller Schalter arbeiten, um einen zwischen der Hochspannungsstromquelle (210) und der Niederspannungsstromquelle (220) erzeugten abnormalen Strom zu blockieren.

3. Nicht isolierter bidirektionaler Gleichspannungswandler (200) nach Anspruch 1, wobei der erste Schutzschalter (251) und der Hochspannungsschalter (231) als antiserieller Schalter arbeiten, um einen zwischen einer an den Niederspannungsschalter (232) angeschlossenen Erde und der Hochspannungsstromquelle (210) erzeugten abnormalen Strom zu blockieren.

4. Nicht isolierter bidirektionaler Gleichspannungswandler (200) nach Anspruch 1, wobei der zweite Schutzschalter (252) und der Niederspannungsschalter (232) als antiserieller Schalter arbeiten, um einen an der Niederspannungsstromquelle (220) erzeugten oder zu der Niederspannungsstromquelle (220) fließenden abnormalen Strom zu blockieren.

5. Nicht isolierter bidirektionaler Gleichspannungswandler (200) nach Anspruch 1, wobei der Schalter ein Halbleiterschalter ist,
wobei ein Source-Anschluss des ersten Schutzschalters (251) mit einer positiven Elektrode der Hochspannungsstromquelle (210) verbunden ist und ein Drain-Anschluss des ersten Schutzschalters (251) mit einem Drain-Anschluss des Hochspannungsschalters (231) verbunden ist und
wobei ein Drain-Anschluss des zweiten Schutzschalters (252) mit der Induktionseinrichtung der Gleichspannungswandlereinheit (230) verbunden ist und ein Source-Anschluss des zweiten Schutzschalters (252) mit einer positiven Elektrode der Niederspannungsstromquelle (220) verbunden ist.

## Revendications

1. Convertisseur CC/CC bidirectionnel non isolé (200), qui effectue une conversion de tension bidirectionnelle entre une source d'alimentation haute tension (210) et une source d'alimentation basse tension (220) comprenant :
une unité de convertisseur CC/CC (230) comprenant une paire d'éléments de commutation composée d'un commutateur haute tension (231) et d'un commutateur basse tension (232), qui sont commutés en mode boost ou en mode buck en réponse à un signal de commutation et une inductance (233) raccordée au commutateur haute tension (231) et au commutateur basse tension (232) ; et
un premier commutateur de protection (251) disposé entre le commutateur haute tension (231) de l'unité de convertisseur CC/CC (230) et la source d'alimentation haute tension (210) afin de servir de commutateur monté tête-bêche conjointement avec le commutateur haute tension (231) ou un deuxième commutateur de protection (252),
le deuxième commutateur de protection (252) disposé entre l'inductance de l'unité de convertisseur CC/CC (230) et la source d'alimentation basse tension (220) afin de servir de commutateur monté tête-bêche conjointement avec le commutateur basse tension (232) ou le premier commutateur de protection (251),
**caractérisé en ce qu'**il comprend :
un premier élément logique (261) configuré pour calculer un produit logique d'un signal de commutation du premier commutateur de protection (251) et d'un signal de commutation du commutateur haute tension (231) et pour appliquer le signal de commutation avec le produit logique calculé au commutateur haute tension (231) ;
et
un deuxième élément logique (262) configuré pour calculer un produit logique d'un signal de commutation du deuxième commutateur de protection (252) et d'un signal de commutation du commutateur basse tension (232) et pour appliquer le signal de commutation avec le produit logique calculé au commutateur basse tension (232), dans lequel le premier élément logique (261) et le deuxième élément logique (262) effectuent la fonction logique ET.

2. Convertisseur CC/CC bidirectionnel non isolé (200) selon la revendication 1, dans lequel le premier commutateur de protection (251) et le deuxième commutateur de protection (252) fonctionnent comme commutateur monté tête-bêche afin de bloquer un courant anormal généré entre la source d'alimentation haute tension (210) et la source d'alimentation basse tension (220).

3. Convertisseur CC/CC bidirectionnel non isolé (200) selon la revendication 1, dans lequel le premier commutateur de protection (251) et le commutateur haute tension (231) fonctionnent comme commutateur monté tête-bêche afin de bloquer un courant anormal généré entre une terre raccordée au commutateur basse tension (232) et la source d'alimentation haute tension (210).

4. Convertisseur CC/CC bidirectionnel non isolé (200) selon la revendication 1, dans lequel le deuxième commutateur de protection (252) et le commutateur basse tension (232) fonctionnent comme commutateur monté tête-bêche afin de bloquer un courant anormal généré à la source d'alimentation basse tension (220) ou circulant vers la source d'alimentation basse tension (220).

5. Convertisseur CC/CC bidirectionnel non isolé (200) selon la revendication 1, dans lequel le commutateur est un commutateur semi-conducteur,
dans lequel une source du premier commutateur de protection (251) est raccordée à une électrode positive de la source d'alimentation haute tension (210) et un drain du premier commutateur de protection (251) est raccordée à un drain du commutateur haute tension (231) et
dans lequel un drain du deuxième commutateur de protection (252) est raccordé à l'inductance de l'unité de convertisseur CC/CC (230) et une source du deuxième commutateur de protection (252) est raccordé à une électrode positive de la source d'alimentation basse tension (220).
